# EUROPEAN PATENT SPECIFICATION

(11) **EP 1 791 769 B1**
(45) Date of publication and mention of the grant of the patent: **23.03.2011**
(21) Application number: 05787033.9
(22) Date of filing: 23.09.2005
(51) Int. Cl.: B65D 83/38, B65D 8/04

(54) **PLASTIC AEROSOL CONTAINER AND METHOD OF MANUFACTURING SAME**
AEROSOLBEHÄLTER AUS KUNSTSTOFF UND HERSTELLUNGSVERFAHREN DAFÜR
CONTENANT AEROSOL EN PLASTIQUE ET SON PROCEDE DE FABRICATION

(30) Priority: 23.09.2004 AU 2004905486
(43) Date of publication of application: 06.06.2007
(73) Proprietor: Petapak Aerosol International Corporation, 87000 Labuan FT (MY)
(72) Inventor: SALAMEH, Asim, New South Wales 2565 (AU)
(74) Representative: Beyer, Andreas
(86) International application number: PCT/AU2005/001474
(87) International publication number: WO 2006/032113

(56) References cited:
- EP-A- 1 078 861
- EP-B1- 0 073 151
- WO-A2-01/08868
- FR-A- 2 508 136
- GB-A- 2 278 802
- US-A- 4 211 344
- US-A- 4 917 271
- US-A- 4 988 018
- US-A- 5 031 384
- US-A- 5 183 188
- US-A- 5 865 337
- US-A1- 2003 132 187
- US-B1- 6 364 181
- US-B1- 6 390 326

## Description

### Background of the Invention

The present invention relates to an aerosol container formed of plastics material, preferably PET, and which is adapted to dispense pressurised or aerosol products. The present invention also relates to a method of manufacturing such a container.

### Description of the Prior Art

Containers for dispensing pressurised products have been, to date, primarily constructed of metal. In particular, a metal body, of substantially cylindrical shape, is formed having a seam along its length. Metal end closures, one having a manually actuable valve device, are affixed to the ends of the cylindrical shape container, and crimped thereto.

Such metal containers have a number of inherent shortcomings. They are prone to rust when in contact with water and are prone to internal corrosion unless provided with an appropriate coating which is compatible with the product to be dispensed or the formulations to be dispensed are prepared in such a way as to prevent corrosion. In use, they are liable to become easily damaged, and/or, damage a substrate surface if they may be accidentally dropped thereon. This is particularly a problem when such containers are commonly used in household applications, and can be easily dropped on tiled surfaces, which may then be easily chipped or damaged.

The deficiencies of such prior art metal containers have resulted in some relatively unsuccessful efforts to replace the metal container with a container formed of plastics.

For example, US Patent No. 6390326 discloses an aerosol container in which is of plastics material, having a body and a shaped neck, formed by blow moulding a plastics preform. A metal collar is then mounted to the neck, and a valve device is engaged with the collar. The drawback of using such an arrangement is that, prior to supply of the product to be dispensed within the container body, the metal collar is required to be carefully placed to rest about the neck. As the container is transported to the packaging plant and/or along the assembly line for supply of a product thereinto, the metal collar is prone to be very easily bumped from its desired position, with the consequence that the valve device cannot then be properly attached thereto.

US 4 917 271 discloses a container for dispensing a pressurized product, said container including a body, formed of plastics material, having a shaped neck about an opening, a collar shaped to straddle external and internal walls of said opening to form a shaped lip therearound, and be attached to said body, and a dispensing valve for attachment to said collar, said valve including an outer flange formed of malleable material and which is shaped to straddle said lip and be retained thereto by being compressed therearound.

EP 1 078 861 A2 relates to a tear resistant bag intended to be inserted into a rigid, hollow container. A penetrable portion of the bag will be pierced by a tubular needle suction means for delivering material contained in the bag to a dispensing valve arranged at the top of the needle suction means.

This therefore identifies a need for an improved aerosol container which has the advantage of being fabricated of plastics material, but which overcomes the disadvantages such known prior art plastic containers.

### Summary of the Invention

The present invention seeks to provide a plastics aerosol container which overcomes the disadvantages of prior art aerosol containers.

The present invention seeks to overcome the disadvantages of the prior art by providing a collar which is formed of plastics material and which is snap-fitted to the neck of the body such that it does not become dislodged from its position during transport or during the filling process of the aerosol product, as happens with the device of US 6390326.

The present invention also seeks to provide a plastics aerosol container which is substantially formed of recyclable plastics material, such as polyethylene terephthalate (PET).

The present invention also seeks to provide a method of manufacturing such a plastics aerosol container.

In one broad form, the present invention provides an aerosol container for dispensing a pressurised product, said container including:
a body, stretch blow moulded from polyethylene terephthalate (PET) or like plastics material, said body having a shaped neck surrounding an opening;
a collar, injection moulded from plastics material, snap-fitted to said shaped neck of said body about said opening; and,
dispensing valve attached to said neck and collar, said valve including an outer flange which is formed of malleable material and which is shaped to fit about and be retained to said collar by being compressed therearound.

Preferably, said shaped neck includes an annular recess therearound, and, said collar includes an annular lip protruding inwardly therefrom, whereby said lip is adapted to cooperate with said recess such that said collar is snap-fitted to said neck of said body.

Alternatively or additionally, said neck may preferably include an outwardly disposed protrusion therearound, whereby said collar is adapted to be snap-fitted over said protrusion and be retained on said container.

In this preferred form, said protrusion is any one or more of a defined lip, an outward taper, or a gradual enlargement of diameter of said neck towards the upper portion thereof.

Preferably, the dispensing valve further includes a seal, formed of rubber or like material, positioned intermediate said neck and said flange, to prevent leakage of said product.

Also preferably, said body is provided with lid engaging means, for releasable engagement of a lid.

Also preferably, said body is provided with base engaging means, for a base to be attached thereto.

Also preferably, the container incorporates at least one strengthening rib therearound to provide structural rigidity to the container.

Preferably, said body is provided with a substantially cylindrical intermediate portion for application of a label thereto.

In a further broad form, the present invention provides a method for manufacturing an aerosol container of the type for dispensing a pressurised product, said method including the steps of:
injection moulding a preform from polyethylene terephthalate (PET) or like plastics material, said preform including a shaped neck, the extremity of which is adapted to be supported in a stretch blow mould apparatus and later in the manufacturing process in a cutting apparatus;
stretch blow moulding said preform such that a container extends from said shaped neck;
cutting the extremity of said neck from said container such that said neck surrounds an opening;
snap-fitting an injection moulded plastics collar to said neck of said container in a position which surrounds said opening; and,
installing a dispensing valve to said neck and collar, said valve including an outer flange which is formed of malleable material and which is shaped to fit about and be retained to said collar by being compressed therearound.

Preferably, said neck is tapered outwardly, such that, when the extremity of the neck is cut, it acts to assist in the snap-fitting of said collar thereto.

Preferably, prior to said valve installing step, said product is provided within said container, and then, after said dispensing valve is installed, said product is pressurised within said container.

Also preferably, the method further includes one or more of the steps of:
releasably attaching a lid to an upper portion of said body;
engaging a base to a lower portion of said body; and,
applying a label to an intermediate portion of said body.

### Brief Description of the Drawings

The present invention will become more fully understood from the following detailed description of a preferred but non-limiting embodiment thereof, described in connection with the accompanying drawings, wherein:
Figure 1 illustrates, in Figure 1(a) thereof, a cross-sectional view of a plastics aerosol container, formed in accordance with the preferred embodiment of the present invention, whilst Figure 1(b) illustrates an enlarged view of the encircled portion marked B in Figure 1(a);
Figure 2 illustrates elevational views of the body of the container, Figure 2(a) showing the container prior to the neck trimming step, and, Figure 2(b) showing the container after the neck trimming step;
Figure 3 illustrates an elevational view of the collar;
Figure 4 illustrates an elevational view of the dispensing valve;
Figure 5 illustrates, in Figure 5(a) thereof, an elevational view of the container with its closure installed, whilst Figure 5(b) shows a cross-sectional detail along lines A-A of Figure 5(a), and Figure 5(c) details the portion labelled B in Figure 5(b);
Figure 6 illustrates a detailed views of the collar of in Figure 3, Figure 6(a) showing a detailed cross-sectional view, whilst Figure 6(b) shows an isometric view of the collar;
Figure 7 illustrates various arrangements of caps or closures, Figures 7(a)(i), 7(b)(i) and 7(c)(i) showing elevational views of the various caps or closures, Figures 7(a)(ii), 7(b)(ii) and 7(c)(ii) showing sectional views along lines D, E and F, whilst Figures 7(a)(iii), 7(b)(iii) and 7(c)(iii) show details of portions H, I and J;
Figure 8 illustrates a preform prior to stretch blow moulding of the body of the container; and,
Figure 9 illustrates, in various arrangements of the base of the container, Figures 9(a) and 9(b) showing a champagne base with cap, whilst Figure 9(c) shows a ribbed champagne base, Figures 9(a)(i) and 9(b)(i) showing elevational views, Figures 9(a)(ii) and 9(b)(ii) showing underside views, Figures 9(a)(iii) and 9(b)(iii) detailing cross-sectional views along lines K-K and M-M of Figures 9(a)(i) and 9(b)(i) respectively, and, Figures 9(a)(iv) and 9(b)(iv) show detailed enlargements of portions L and N of Figures 9(a)(iii) and 9(b)(iii), respectively.

### Detailed Description of Preferred Embodiment

Throughout the drawings, like numerals will be used to identify similar features, except where expressly otherwise indicated.

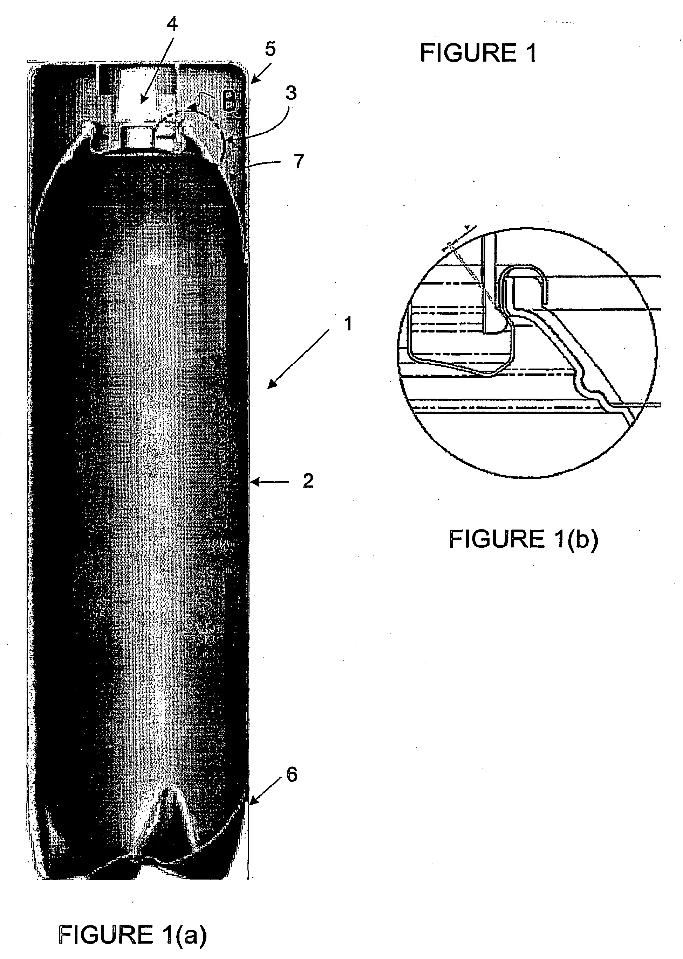

As shown in Figure 1, an aerosol container, generally designated by the numeral 1, is formed of plastics material and has a body portion 2, a collar 3, a valving mechanism 4, and a cap or closure 5.

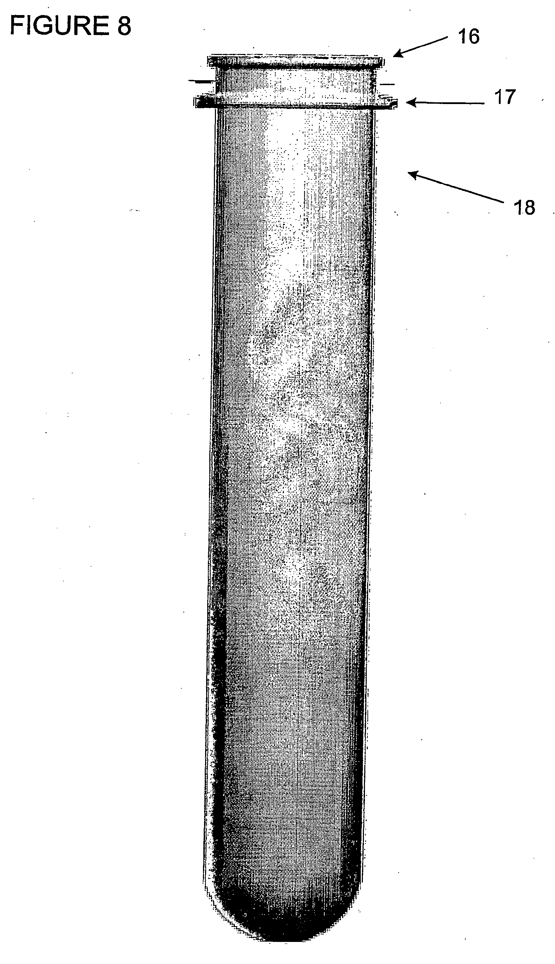

The body portion 2 is formed to have a base 6 at a first end thereof, and a neck portion 7 at a second end thereof. The body 2, including its base 6 and neck portion 7, are all integrally formed by stretch blow moulding plastics material, such as polyethylene terephthalate (PET) from a preform, such as shown in Figure 8.

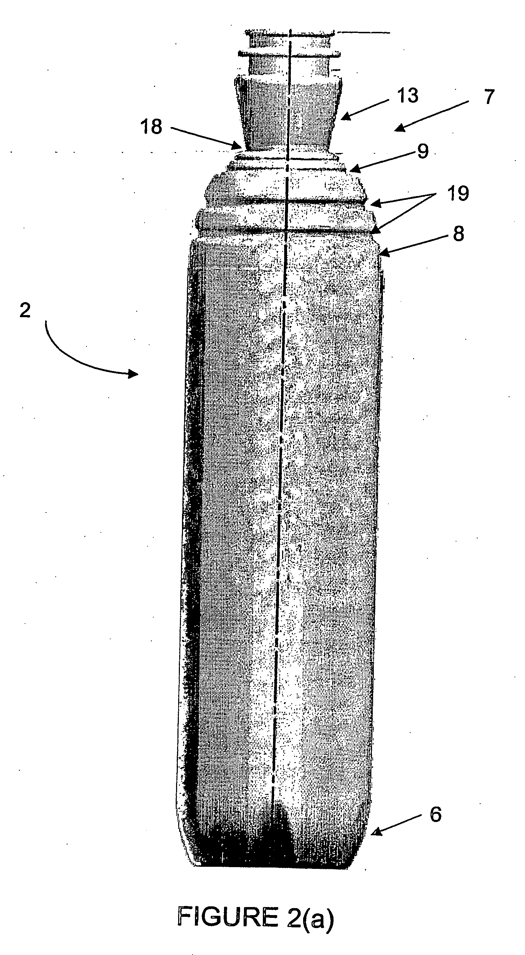

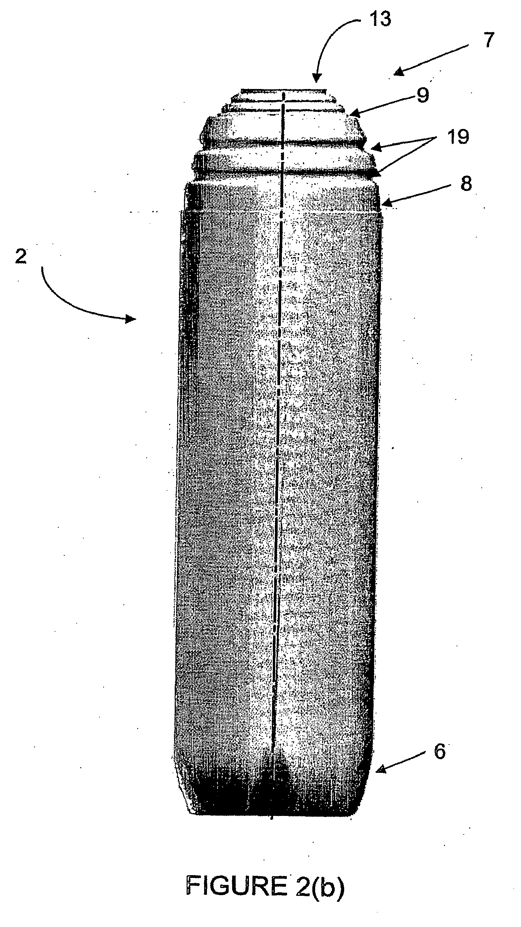

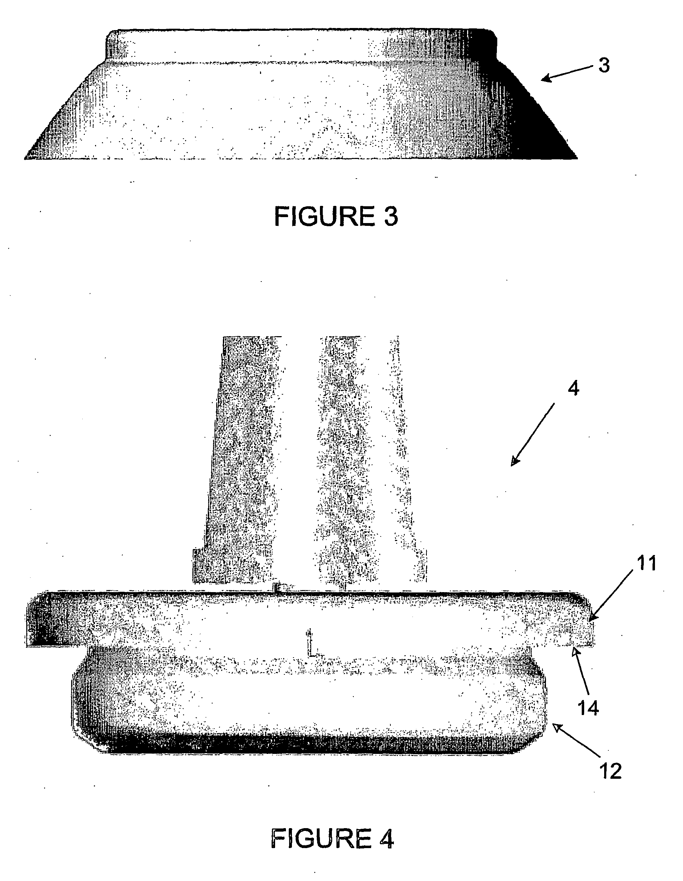

Figure 2(a) shows the container after blow moulding but before the neck is trimmed, whilst Figure 2(b) shows the same container after the neck is trimmed. It will be noted from the elevational view of the body portion 2, illustrated in Figure 2, that the upper or neck portion 7 of the body of the container is formed having various discrete features including a rebated portion 8 to which the cap 5 may be neatly fitted to the container, an annular recess 9 to which the collar 3, shown in Figure 3, is adapted to engage, and one or more ribs 19 (either outwardly or inwardly protruding) which may act as alternative engagement points for the cap or closure or other components and/or as strengthening ribs to provide structural rigidity to the container, particularly when pressurised. An opening 10 is formed in the top of the neck 7, to receive the dispensing valve (described hereinafter).

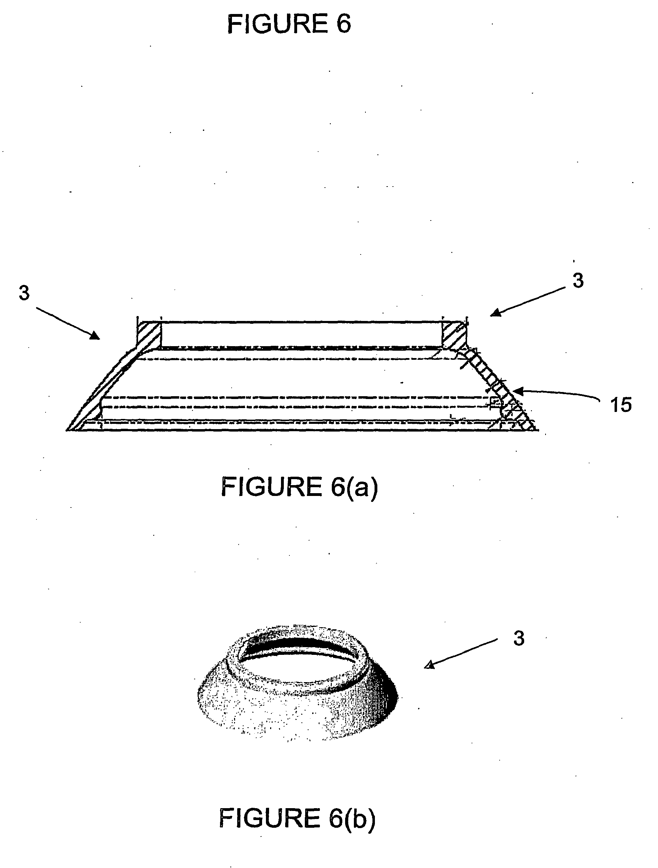

The collar, illustrated by reference numeral 3, in Figures 3 and 6, is formed by injection moulding from plastics material, and is shaped to preferably be snap-fitted to the shaped neck 7 of the body 2 about the opening 10. This is formed by the provision of an annular recess 9 on the neck 7 of the body 2, which is adapted to engage an annular lip protruding inwardly from the inner surface of the collar 3, perhaps best illustrated in Figure 6(a). The collar 3 is preferably formed of plastics material and has the characteristics of being strong and rigid with some degree of flexibility, such that it provides strength to the neck 7 of the body 2, which is important when housing a pressurised product, whilst having some degree of flexibility to enable it to be snap-fitted to the neck 7 of the body 2. Suitable materials will become apparent to persons skilled in the art.

Once the collar 3 is positioned about the neck 7, a dispensing valve 4, as illustrated in Figure 4, may be attached by being compressed therearound. The dispensing valve is of the conventional type of dispensing valve used in prior art metal aerosol containers. It is preferably formed of metal or like malleable material, and provided with an outer flange 11 which is shaped to fit about and be retained to the collar 3 by being compressed therearound. The lower portion 12 of the dispensing valve 4 is adapted to fit within the opening 10 of the body 2.

It should be noted that the upper portion 13 of the neck 7 of the container 1 may be provided with an outwardly disposed protrusion, formed by a defined lip, an outward taper and/or gradual enlargement of the neck, such that, when it is cut (as shown in Figure 2(b), there is a slight outward protrusion, which the collar 3 can ride over in a manner to cause fitting of the collar 3 to the neck 7. In one embodiment, the upper portion 13 of the neck 7 may be cut from the preform in a way in which it slightly protrudes and the outer portion of the flange 11 can fit about the protruding neck 7. An annular recess 9 may alternatively or additionally be provided about the neck 7 of the container 1, adapted to cooperate in snap- fitting engagement with the annular protrusion 15 provided on the inner surface of the collar 3.

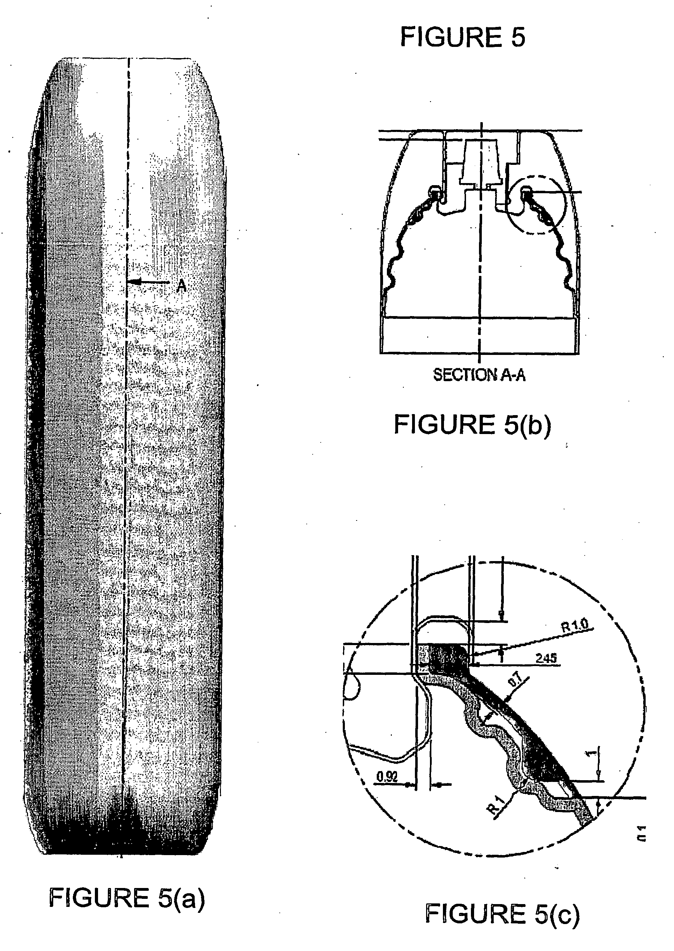

A seal 14 is also preferably provided between the engaging portions of the neck 7 and the dispensing valve 4, such as illustrated by reference numeral 14. This is provided to prevent leakage of the product between the collar and the neck. More detailed views of the body and the collar are shown in Figure 5.

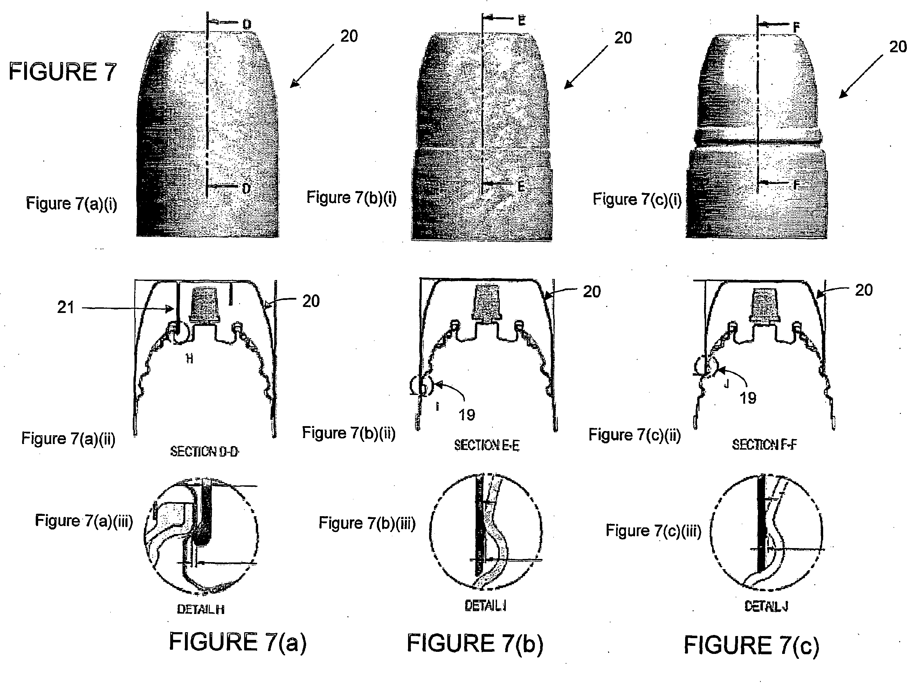

Figure 7 illustrates various embodiments of caps, closures or lids 20, which may be engaged with an upper portion of the container 1. Figure 7(a)(i), 7(b)(i) and 7(c)(i) illustrate elevational views of various forms of caps which are of slightly different diameters and which engage slightly differently to the container 1. Specifically, the cap 20 of Figures 7(a) is of equivalent diameter to the container 1, and is engaged by finger(s) 21 contacting the neck 7 of the container 1, whilst Figures 7(b) and 7(c) show how the cap 20 may engage a rib 19 provided on the upper portion of the container 1 by an appropriately positioned lip 21.

Figure 8 illustrates a preform, from which the aerosol container 1 of the present invention may be stretch blow moulded. It has a pair of annular protruding rings 16 and 17 therearound which are used for gripping purposes. Once the container 1 is stretch blow moulded, the container 1 shown in Figure 2(a) is cut off at a position approximately indicated by reference numeral 18 to achieve the container 1 shown in Figure 2(b), the upper portion of the blow moulded preform then being discarded or recycled.

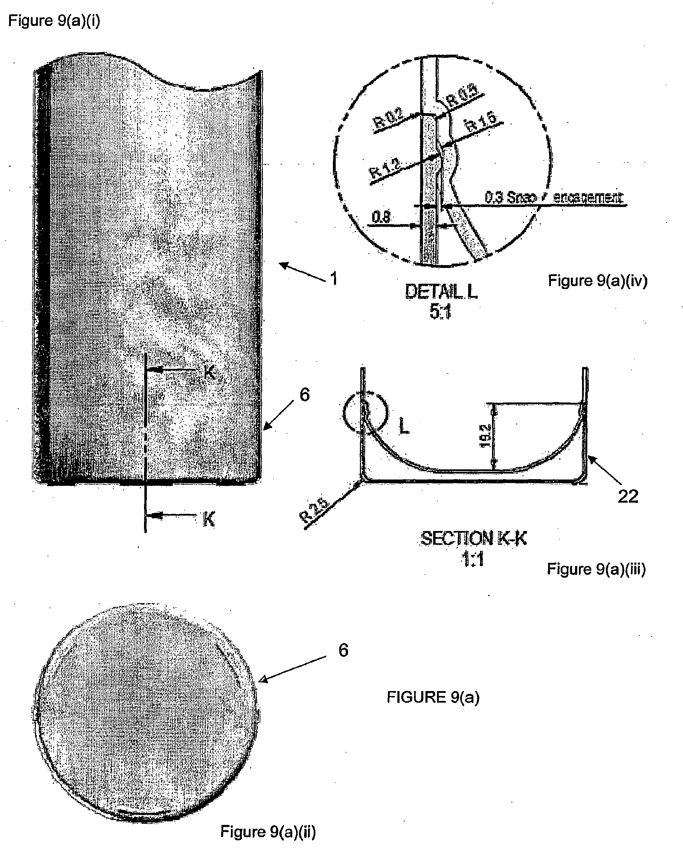

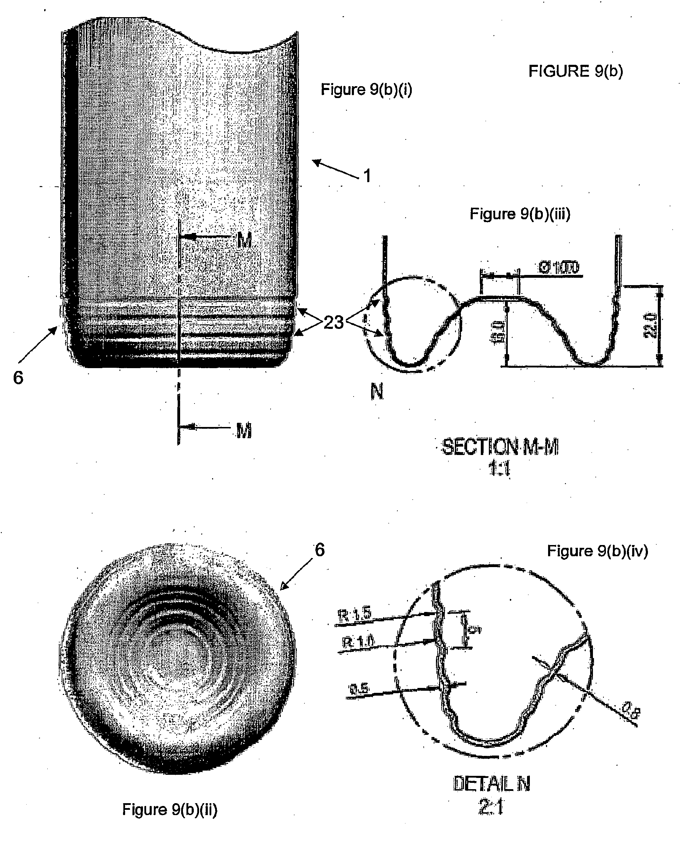

Figure 9 illustrates, in Figures 9(a) and 9(b), various alternative arrangements for the base 6 of the container 1. Figure 9(a) shows a champagne base with a cap 22 being attached, by, for example, snap fitting to a suitable attachment, as best illustrated in Figure 9(a)(iv). Figure 9(b) illustrates an alternative arrangement, whereby the base is more simply formed as a ribbed champagne base, with strengthening ribs 23 appropriately positioned therearound.

It will be appreciated that the aerosol container described in the present invention has advantages over conventional type metal aerosol containers. It will also be appreciated that whilst particular embodiments have been hereinbefore described, variations and modifications may be made to the shape and configuration thereto, still achieving advantages to the invention. Such variations and modifications should be considered to be within the scope of the invention as hereinbefore described.

It would also be appreciated that the method of manufacturing the aerosol container has significant advantages over prior art methods of manufacturing aerosol type containers.

In the assembly of the container, it will be appreciated that firstly, a preform, such as shown in Figure 8, is made by the process or injection moulding. The container is then stretch blow moulded from the preform, to achieve the container shown in Figure 2(a). The top of the preform, that is, the extremity of the neck, can be cut, using a laser cutter, rotary knives or any other cutting mechanism. The cut portion may be discarded or recycled. The container with the extremity of the neck cut therefrom is shown in Figure 2(b). A collar, such as shown in Figure 3, may then be attached by snap fitting the collar to the top of the container. By the snap fitting of the collar to the container, the collar is not prone to be easily bumped off the top of the container during the on-going manufacturing/assembling process. This was a significant disadvantage of the metal collared prior art product shown in the aforementioned US Patent. That is, the metal collar of the afore mentioned US Patent simply rests atop the neck of the container and is liable to be easily bumped or removed during the filling/ assembly process.

Once the collar is attached to the top of the container, product may be supplied into the container, and the dispensing valve, such as shown in Figure 4, may be attached and compressed around the collar for securement thereto. A closure 20 may then be applied to the top of the container 1, such as shown in Figure 7, as may a base 6, as shown in Figure 9, and any associated labelling may then be applied to the plastics aerosol container.

Obviously the plastics aerosol container of the present invention will be capable of dispensing a variety of products, including all products known to be currently dispensed from metal aerosol containers. The plastics aerosol container, formed of PET material, however, has the significant advantage that it can be readily recycled, and is thus more environmentally friendly.

It will be appreciated that numerous variations and modifications may also be made to the method of manufacture of the plastics aerosol container, and the filling of the plastics aerosol container.

## Claims

1. An aerosol container (1) for dispensing a pressurised product, said container (1) including:
a body (2), stretch blow moulded from polyethylene terephthalate (PET) or like plastics material, said body (2) having a shaped neck (7) surrounding an opening (10),
a collar (3), injection moulded from plastics material, snap-fitted to said shaped neck (7) of said body (2) about said opening (10), and,
a dispensing valve (4) attached to said neck (7) and collar (3), said valve (4) including an outer flange (11) which is formed of malleable material and which is shaped to fit about and be retained to said collar (3) by being compressed therearound.

2. The container (1) as claimed in claim 1,
wherein said shaped neck (7) includes an annular recess (9) therearound, and said collar (3) includes an annular lip protruding inwardly therefrom, whereby said lip is adapted to cooperate with said recess (9) such that said collar (3) is snap-fitted to said neck (7) of said body (2).

3. The container (1) as claimed in claim 1 or 2,
wherein said neck (7) includes an outwardly disposed protrusion therearound, whereby said collar (3) is adapted to be snap-fitted over said protrusion and be retained on said container (1).

4. The container (1) as claimed in claim 3,
wherein said protrusion is any one or more of a defined lip, an outward taper, or a gradual enlargement of diameter of said neck (7) towards the upper portion (13) thereof.

5. The container (1) as claimed in any one of claims 1 to 4,
wherein the dispensing valve (4) further includes a seal (14), formed of rubber or like material, positioned intermediate said neck (7) and said flange (11), to prevent leakage of said product.

6. The container (1) as claimed in any one of claims 1 to 5,
wherein said body (2) is provided with lid engaging means, for releasable engagement of a lid.

7. The container (1) as claimed in any one of claims 1 to 6,
wherein said body (2) is provided with base engaging means, for a base (6) to be attached thereto.

8. The container (1) as claimed in any one of claims 1 to 7,
wherein the container (1) incorporates at least one strengthening rib (19) therearound to provide structural rigidity to the container (1).

9. The container (1) as claimed in any one of claims 1 to 8,
wherein the body (2) is provided with a substantially cylindrical intermediate portion for application of a label thereto.

10. A method for manufacturing an aerosol container (1) of the type for dispensing a pressurised product, said method including the steps of:
injection moulding a preform from polyethylene terephthalate (PET) or like plastics material, said preform including a shaped neck (7), the extremity of which is adapted to be supported in a stretch blow mould apparatus and later in the manufacturing process in a cutting apparatus,
stretch blow moulding said preform such that a container (1) extends from said shaped neck (7),
cutting the extremity of said neck (7) from said container (1) such that said neck (7) surrounds an opening (10),
snap-fitting an injection moulded plastics collar (3) to said neck (7) of said container (1) in a position which surrounds said opening (10), and,
installing a dispensing valve (4) to said neck (7) and collar (3), said valve (4) including an outer flange (11) which is formed of malleable material and which is shaped to fit about and be retained to said collar (3) by being compressed therearound.

11. A method as claimed in claim 10,
in which said neck (7) is tapered outwardly, such that, when the extremity of the neck (7) is cut, it acts to assist in the snap-fitting of said collar (3) thereto.

12. A method as claimed in claim 10 or 11,
wherein, prior to said valve installing step, said product is provided within said container (1), and then, after said dispensing valve (4) is installed, said product is pressurised within said container (1).

13. A method as claimed in any one of claims 10 to 12, further including one or more of the steps of:
- releasably attaching a lid to an upper portion of said body (2),
- engaging a base (6) to a lower portion of said body (2), and,
- applying a label to an intermediate portion of said body (2).

## Patentansprüche

1. Aerosol-Behälter (1) zur Abgabe eines unter Druck stehenden Produkts, wobei der Behälter (1) umfasst:
- einen aus Polyethylenterephthalat (PET) oder ähnlichem Kunststoff streckgeblasenen Körper (2), wobei der Körper (2) einen eine Öffnung (10) umgebenden geformten Hals (7) aufweist,
- einen aus Kunststoff spritzgegossenen Kragen (3), der mittels Schnappverbindung an dem geformten Hals (7) des Körpers (2) um die Öffnung (10) befestigt ist, und
- ein am Hals (7) und Kragen (3) befestigtes Abgabeventil (4), wobei das Ventil (4) einen Außenflansch (11) aufweist, der aus einem verformbaren Material gefertigt und so geformt ist, dass er um den Kragen (3) passt und durch Zusammendrücken daran fixiert wird.

2. Behälter (1) nach Anspruch 1,
bei dem der geformte Hals (7) eine umlaufende ringförmige Aussparung (9) und der Kragen (3) eine von ihm einwärts ragende ringförmige Lippe aufweist, wodurch die Lippe mit der Aussparung (9) so zusammenzuwirken vermag, dass der Kragen (3) mittels Schnappverbindung am Hals (7) des Körpers (2) befestigt ist.

3. Behälter (1) nach Anspruch 1 oder 2,
bei dem der Hals (7) einen umlaufenden nach außen gerichteten Vorsprung umfasst, wodurch der Kragen (3) mittels Schnappverbindung über dem Vorsprung befestigt und am Behälter (1) fixierbar ist.

4. Behälter (1) nach Anspruch 3,
bei dem der Vorsprung eine definierte Lippe, eine nach außen gerichtete Abschrägung und/oder eine allmähliche Durchmesservergrößerung des Halses (7) in Richtung seines oberem Abschnitts (13) ist.

5. Behälter (1) nach einem der Ansprüche 1 bis 4,
bei dem das Abgabeventil (4) ferner eine aus Gummi oder einem ähnlichen Material gefertigte Dichtung (14) umfasst, die zwischen dem Hals (7) und dem Flansch (11) angeordnet ist, um ein Auslaufen des Produkts zu verhindern.

6. Behälter (1) nach einem der Ansprüche 1 bis 5,
bei dem der Körper (2) mit einer Deckeleingriffseinrichtung zum lösbaren Ineingriffbringen eines Deckels versehen ist.

7. Behälter (1) nach einem der Ansprüche 1 bis 6,
bei dem der Körper (2) mit einer Bodeneingriffseinrichtung für einen daran zu befestigenden Boden (6) versehen ist.

8. Behälter (1) nach einem der Ansprüche 1 bis 7,
bei dem der Behälter (1) wenigstens eine umlaufende Verstärkungsrippe (19) umfasst, um dem Behälter (1) strukturelle Festigkeit zu verleihen.

9. Behälter (1) nach einem der Ansprüche 1 bis 8,
bei dem der Körper (2) mit einem im Wesentlichen zylindrischen mittleren Abschnitt zum Anbringen eines Etiketts versehen ist.

10. Verfahren zum Herstellen eines Aerosol-Behälters (1) zur Abgabe eines unter Druck stehenden Produkts, wobei das Verfahren die Schritte umfasst:
- Spritzgießen eines Vorformlings aus Polyethylenterephthalat (PET) oder ähnlichem Kunststoff, wobei der Vorformling einen geformten Hals (7) umfasst, dessen Extremität in einer Streckblasvorrichtung und später im Herstellungsverfahren in einer Schneidvorrichtung gehalten werden kann,
- Streckblasen des Vorformlings, so dass sich von dem geformten Hals (7) ein Behälter (1) erstreckt,
- Abschneiden der Extremität des Halses (7) von dem Behälter (1), so dass der Hals (7) eine Öffnung (10) umgibt,
- Schnappverbinden eines spritzgegossenen Kunststoffkragens (3) am Hals (7) des Behälters (1) in einer die Öffnung (10) umgebenden Position, und
- Einbauen eines Abgabeventils (4) am Hals (7) und Kragen (3), wobei das Ventil (4) einen Außenflansch (11) umfasst, der aus einem verformbaren Material gefertigt und so geformt ist, dass er um den Kragen (3) passt und durch Zusammendrücken daran fixiert wird.

11. Verfahren nach Anspruch 10,
bei dem sich der Hals (7) nach außen erweitert, so dass er, wenn die Extremität des Halses (7) abgeschnitten wird, beim Schnappverbinden des Kragens (3) daran hilft.

12. Verfahren nach Anspruch 10 oder 11,
bei dem das Produkt vor dem Ventileinbauschritt in den Behälter (1) gefüllt und das Produkt nach dem Einbau des Abgabeventils (4) in dem Behälter (1) unter Druck gesetzt wird.

13. Verfahren nach einem der Ansprüche 10 bis 12,
das ferner einen oder mehrere der Schritte umfasst:
- lösbares Befestigen eines Deckels an einem oberen Abschnitt des Körpers (2),
- Ineingriffbringen eines Bodens (6) an einem unteren Abschnitt des Körpers (2), und
- Anbringen eines Etiketts an einem mittleren Abschnitt des Körpers (2).

## Revendications

1. Récipient (1) pour aérosol pour distribuer un produit sous pression, ledit récipient (1) incluant:
un corps (2), moulé par soufflage avec étirage à partir de poly(téréphtalate d'éthylène) (PET) ou d'un matériau plastique similaire, ledit corps (2) ayant un col (7) conformé entourant une ouverture (10),
un collier (3), moulé par injection à partir d'un matériau plastique, ajusté par encliquetage sur ledit col (7) conformé dudit corps (2) autour de ladite ouverture (10), et
une valve (4) de distribution fixée auxdits col (7) et collier (3), ladite valve (4) incluant un rebord extérieur (11) qui est formé d'un matériau malléable et qui est de forme à s'ajuster autour dudit et à être retenu sur ledit collier (3) en étant compressé autour de celui-ci.

2. Récipient (1) selon la revendication 1,
dans lequel ledit col (7) conformé inclut un renfoncement (9) annulaire autour de celui-ci, et ledit collier (3) inclut une lèvre annulaire faisant saillie vers l'intérieur à partir de celui-ci, d'où il résulte que ladite lèvre est adaptée à coopérer avec ledit renfoncement (9) de telle sorte que ledit collier (3) est ajusté par encliquetage sur ledit col (7) dudit corps (2).

3. Récipient (1) selon la revendication 1 ou 2,
dans lequel ledit col (7) inclut une saillie disposée vers l'extérieur autour de celui-ci, d'où il résulte que ledit collier (3) est adapté à être ajusté par encliquetage sur ladite saillie et à être maintenu sur ledit récipient (1).

4. Récipient (1) selon la revendication 3,
dans lequel ladite saillie est l'un quelconque ou plusieurs d'une lèvre définie, d'un cône vers l'extérieur, ou d'un agrandissement progressif du diamètre dudit col (7) vers la partie supérieure (13) de celui-ci.

5. Récipient (1) selon l'une quelconque des revendications 1 à 4,
dans lequel la valve (4) de distribution inclut en outre un joint d'étanchéité (14), formé de caoutchouc ou d'un matériau similaire, positionné entre ledit col (7) et ledit rebord (11), pour empêcher une fuite dudit produit.

6. Récipient (1) selon l'une quelconque des revendications 1 à 5,
dans lequel ledit corps (2) est prévu avec un moyen d'engagement de couvercle pour un engagement libérable d'un couvercle.

7. Récipient (1) selon l'une quelconque des revendications 1 à 6,
dans lequel ledit corps (2) est prévu avec un moyen d'engagement de base pour qu'une base (6) soit fixée à celui-ci.

8. Récipient (1) selon l'une quelconque des revendications 1 à 7,
dans lequel le récipient (1) incorpore au moins une nervure de renfort (19) autour de celui-ci pour donner une rigidité structurelle au récipient (1).

9. Récipient (1) selon l'une quelconque des revendications 1 à 8,
dans lequel ledit corps (2) est prévu avec une partie intermédiaire sensiblement cylindrique pour une application d'une étiquette sur celle-ci.

10. Procédé de fabrication d'un récipient (1) pour aérosol du type pour distribuer un produit sous pression, ledit procédé incluant les étapes de:
moulage par injection d'une préforme à partir de poly(téréphtalate d'éthylène) (PET) ou d'un matériau plastique similaire, ladite préforme incluant un col (7) conformé, l'extrémité duquel est adaptée à être supportée dans un appareil de moulage par soufflage avec étirage et ultérieurement dans le processus de fabrication dans un appareil de coupe,
moulage par soufflage avec étirage de ladite préforme de telle manière qu'un récipient (1) s'étend à partir dudit col (7) conformé,
coupe de l'extrémité dudit col (7) dudit récipient (1) de telle manière que ledit col (7) entoure une ouverture (10),
ajustement par encliquetage d'un collier (3) en plastique moulé par injection sur ledit col (7) dudit récipient (1) dans une position qui entoure ladite ouverture (10), et
installation d'une valve (4) de distribution sur lesdits col (7) et collier (3), ladite valve (4) incluant un rebord extérieur (11) qui est formé d'un matériau malléable et qui est de forme à s'ajuster autour dudit et à être retenu sur ledit collier (3) en étant compressé autour de celui-ci.

11. Procédé selon la revendication 10,
dans lequel ledit col (7) part en cône vers l'extérieur, de telle manière que, lorsque l'extrémité du col (7) est coupée, il agit de façon à aider à l'ajustement par encliquetage dudit collier (3) sur celui-ci.

12. Procédé selon la revendication 10 ou 11,
dans lequel, avant ladite étape d'installation de la valve, ledit produit est transféré à l'intérieur dudit récipient (1), et ensuite, après que ladite valve (4) de distribution a été installée, ledit produit est mis sous pression à l'intérieur dudit récipient (1).

13. Procédé selon l'une quelconque des revendications 10 à 12, incluant en outre une ou plusieurs des étapes de:
- fixation de façon libérable d'un couvercle à une partie supérieure dudit corps (2),
- engagement d'une base (6) avec une partie inférieure dudit corps (2), et
- application d'une étiquette sur une partie intermédiaire dudit corps (2).
